Europäisches Patentamt

European Patent Office

Office européen des brevets

(11) Veröffentlichungsnummer: **0 434 975 A1**

# (12) EUROPÄISCHE PATENTANMELDUNG

(21) Anmeldenummer: 90122219.0

(22) Anmeldetag: 20.11.90

(51) Int. Cl.⁵: **B29B 17/00**, B23D 45/10, B23D 47/04, B02C 18/06

(30) Priorität: 29.11.89 DE 3939439

(43) Veröffentlichungstag der Anmeldung:
03.07.91 Patentblatt 91/27

(84) Benannte Vertragsstaaten:
AT BE CH DE DK ES FR GB GR IT LI LU NL SE

(71) Anmelder: GUMMIVERWERTUNGS-GmbH
(KSB)
Adolf-Kolpingstrasse 9
W-8346 Simbach am Inn(DE)

(72) Erfinder: Klepsch, Christian
Koppelstrasse 8
A-5201 Seekirchen b. Salzburg(AT)

(74) Vertreter: Kern, Ralf M., Dipl.-Ing.
Postfach 14 03 29
W-8000 München 5(DE)

(54) Grobschnetzelmaschine zum Zerkleinern von Altreifen.

(57) Die vorliegende Erfindung betrifft eine Grob-schnetzelmaschine zum Zerkleinern von Altreifen,

Um eine möglichst effiziente Zerkleinerung von Altreifen zu erreichen, ist im Rahmen der vorliegenden Erfindung vorgesehen daß dieselbe eine rotierende Welle (6) aufweist, entlang welcher in regelmäßigen Abständen eine Mehrzahl von Kreissägeblättern (7) befestigt sind, und daß zusätzlich eine Fördereinrichtung (11, 22) vorgesehen ist, mit welcher die zu zerschneidenden Altreifen (4) genau positioniert und vorzugsweise in Längsrichtung ausgerichtet durch die Anordnung von rotierenden Kreissägeblättern (7) drückbar sind.

EP 0 434 975 A1

## GROBSCHNETZELMASCHINE ZUM ZERKLEINERN VON ALTREIFEN

Die vorliegende Erfindung bezieht sich auf eine Grobschnetzelmaschine zum Zerkleinern von Altreifen entsprechend dem Oberbegriff des Anspruchs 1.

Aufgrund der zunehmenden Motorisierung fallen heutzutage große Mengen von Altreifen an, deren Entsorgung im Hinblick auf Umweltbelastungen sich nur mit hohen Kosten durchführen läßt. Auf der anderen Seite zeigt es sich, daß Altreifen in stark zerkleinerter Form geschätzte Materialien sind, weil dieselben als Teerbeimengungen für Flüsterasphalte sehr gut verwendet werden können.

Die Zerkleinerung von Altreifen von Kraftfahrzeugen bereitet jedoch erhebliche Schwierigkeiten, weil derartige Altreifen in zunehmendem Maße einen hohen Anteil von Stahldrahteinlagen aufweisen, welche eine Aufbereitung sehr erschweren. Die heutzutage zur Verfügung stehenden Reißwerke besitzen dabei die folgenden sehr erheblichen Nachteile:

- Damit die erforderliche Zerreißarbeit durchgeführt werden kann, müssen derartige Anlagen äußerst robust gebaut sein, was zu erheblichen Anschaffungskosten führt.
- Aufgrund der großen Festigkeit der vorhandenen Stahldrahteinlagen können diese Anlagen fernerhin nur mit sehr hohem Energiebedarf betrieben werden, was zu erheblichen Betriebskosten führt.
- Aufgrund des Zerreißvorgangs fallen schließlich noch sehr unregelmäßig geformte Grobschnetzel an, welche nur unter erheblichen Schwierigkeiten weiterverarbeitet werden können.

Es ist demzufolge Aufgabe der vorliegenden Erfindung, eine Grobschnetzelmaschine zum Zerkleinern von Altreifen zu schaffen, welche bei relativ geringen Herstellungskosten und geringem Energiebedarf große Mengen von Altreifen in Grobschnetzel zerkleinert, welche aufgrund gleichmäßiger Formgebung sehr gut zur Weiterverarbeitung verwendet werden können.

Erfindungsgemäß wird dies durch Vorsehen der im kennzeichnenden Teil des Anspruchs 1 aufgeführten Merkmale erreicht.

Vorteilhafte Weiterbildungen der Erfindung ergeben sich anhand der Unteransprüche 2 bis 14.

Im Rahmen von Untersuchungen, welche zu der vorliegenden Erfindung geführt haben, hat es sich gezeigt, daß Altreifen mit relativ geringem Energieaufwand in Stücke vorgegebener Größe zerkleinert werden können, wenn für die Durchführung des Zerkleinerungsvorgangs Trennscheiben eingesetzt werden, so wie sie zum Schneiden von Betonflächen im Straßenbau entwickelt worden sind. Da bei einem derartigen Schneidvorgang die zu zerschneidenden Altreifen im Gegensatz von Betonflächen nachgeben, muß jedoch dafür Sorge getragen werden, daß während des Schneidvorgangs die jeweiligen Altreifen nicht ausweichen können, zu welchem Zweck besondere Fördereinrichtungen vorzusehen sind, die ein Ausweichen bzw. Auswandern der verformbaren Altreifen verhindern.

Die Erfindung soll nunmehr anhand von Ausführungsbeispielen näher erläutert und beschrieben werden, wobei auf die beigefügte Zeichnung Bezug genommen ist. Es zeigen:

Fig. 1 eine perspektivische Ansicht einer ersten Ausführungsform der erfindungsgemäßen Grobschnetzelmaschine;

Fig. 2 eine seitliche Ansicht der Grobschnetzelmaschine von Fig. 1;

Fig. 3 eine Stirnansicht der zum Zerkleinern von Altreifen verwendeten Anordnung von Kreissägeblättern;

Fig. 4 eine seitliche Ansicht einer abgewandelten Ausführungsform eines Kreissägeblattes, bei welchem die Schneidorgane auswechselbar angeordnet sind;

Fig. 5 bis 7 seitliche schematische Ansichten von abgewandelten Ausführungsformen von Grobschnetzelmaschinen, bei welchen die vorgesehenen Fördereinrichtungen in Form von unterschiedlich ausgestalteten Zackenwalzen ausgebildet sind;

Fig. 8 eine seitliche Ansicht einer besonders zweckmäßig erscheinenden Ausführungsform einer Grobschnetzelmaschine, bei welcher Altreifen unterschiedlicher Dicke sehr gut verarbeitet werden können, und

Fig.9a bis c seitliche Ansichten abgewandelter Ausführunhgsformen von Zackenscheiben, so wie sie bei einer Grobschnetzelmaschine gemäß Fig. 8 verwendbar sind.

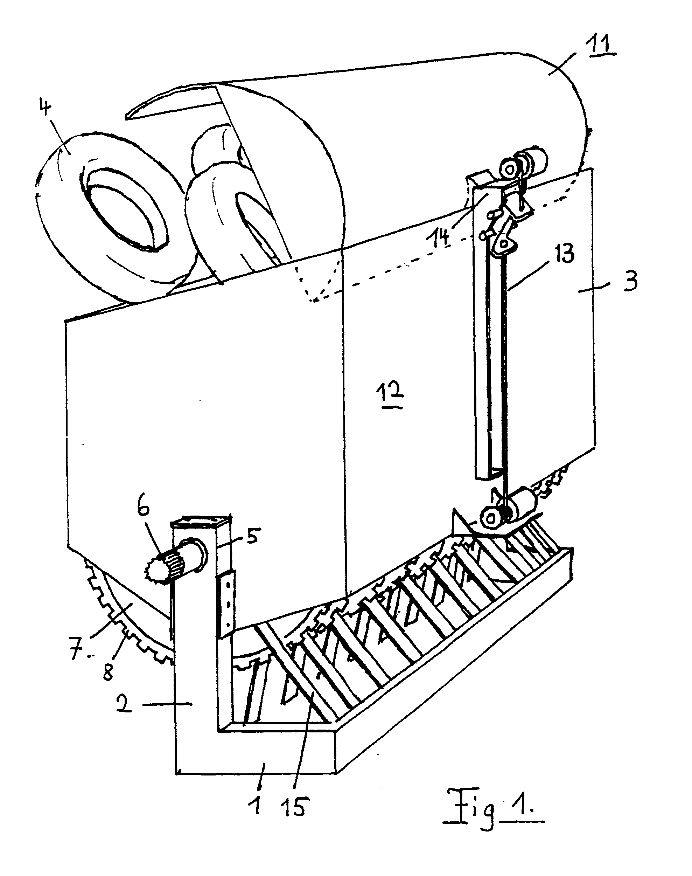

Bei der in den Fig. 1 bis 3 dargestellten ersten Ausführungsform der erfindungsgemäßen Grobschnetzelmaschine ist eine untere Rahmenplatte 1 vorgesehen, welche mittels vertikaler Träger 2 ein in etwa quaderförmiges Gehäuse 3 trägt. Dieses Gehäuse 3 ist nach oben und unten hin offen, so daß von oben her das Einführen der zu zerkleinernden Altreifen 4 erfolgen kann, während die hergestellten Grobschnetzel nach der Zerkleinerung der Altreifen 4 am unteren Ende des quaderförmigen Gehäuses 3 abgegeben werden.

Am oberen Ende der an beiden Seiten der Rahmenplatte 1 vorgesehenen vertikalen Träger 2 sind entsprechende Lager 5 vorgesehen, in welchen eine mittig durch das Gehäuse 3 hindurchführende Welle 6 gelagert ist, die von der einen Seite her mittels eines nicht dargestellten elektrischen Antriebs in Rotation versetzt werden kann. Diese Welle 6 trägt in regelmäßigen Abständen Kreissägeblätter 7, deren Durchmesser der Querer strekkung des quaderförmigen Gehäuses 3 angepaßt sind. Diese Kreissägeblätter 7 werden dabei vorzugsweise durch Trennscheiben gebildet, so wie sie zum Schneiden von Stahlbetonplatten zum Einsatz gelangen. Diese Trennscheiben weisen in regelmäßigen Abständen angeordnete rechteckige Zähne 8 auf, welche mit einer Diamantbeschichtung versehen sind. Der gewünschte Abstand zwischen den einzelnen Kreissägeblättern 7 kann mit Hilfe von entsprechenden Abstandsringen 9 passend eingestellt werden. Das durch die Kreissägeblätter 7 und die Abstandsringe 9 gebildete Paket wird mittels auf der Welle 6 aufschraubbaren Muttern 10 zusammemgehalten.

Im oberen Bereich des quaderförmigen Gehäuses 3 ist ein halbzylindrischer Verschlußdeckel 11 vorgesehen, welcher mit Hilfe eines im Bereich der Rückwandung 12 des Gehäuses 3 vorgesehenen Seilwindenantriebes 13 nach unten gefahren werden kann, wodurch die innerhalb des Gehäuses 3 befindlichen Altreifen 4 in Richtung der rotierenden Kreissägeblätter 7 gedrückt werden. Im oberen Bereich des vorgesehenen Seilwindenantriebes 13 ist zusätzlich ein starrer Anschlag 14 vorgesehen, mit welchem erreicht wird, daß in der voll nach oben gefahrenen Position der Verschlußdeckel 11 nach rückwärts gekippt wird, so daß eine störungsfreie Füllung des Gehäuses 3 mit Altreifen 4 durchführbar ist.

Im unteren Bereich des Gehäuses 3 sind schließlich noch Ab-streifer 15 vorgesehen, welche in Form von länglichen Gebilden ausgebildet sind, die sich von der Rahmenplatte 1 schräg nach oben in Richtung der die Kreissägeblätter 7 tragenden Welle 6 erstrecken. Diese länglichen Abstreifer 15 ragen dabei jeweils in die Zwischenräume zwischen den Kreissägeblättern 7, so daß bei der Rotation dieser Kreissägeblätter 7 eventuell von denselben mitgeführte Grobschnetzel abgestreift werden. Die Drehrichtung der Kreissägeblätter 7 ist dabei derart gewählt, daß die hergestellten Grobschnetzel vor allem auf der von der Rahmenplatte 1 freien Seite herunterfallen, so daß dieselben mit Hilfe eines nicht dargestellten Förderbandes zur Weiterverar beitung entfernt werden können.

Fig. 4 zeigt eine abgewandelte Ausführungsform eines Kreissägeblattes 7', welches in diesem Fall eine Trägerscheibe 16 aufweist. Diese Trägerscheibe 16 ist mit einer mittigen Bohrung 17 versehen, durch welche die der Halterung der Trägerscheibe 16 dienende Welle 6 hindurchgeführt werden kann. Entlang des Umfangs weist diese Trägerscheibe 16 eine kreisförmig nach innen gewölbte Rille sowie je nach Wunsch zwei oder vier jeweils um 180° bzw. 90° gegeneinander versetzt angeordnete rechteckige Aussparungen 18 auf, welche krümmungsmäßig in den mit der Rille versehenen Umfangsbereich der Trägerscheibe 16 übergehen. In die entlang des Umfangs der Trägerscheibe 16 vorgesehene Rille sind Abschnitte von Schneiddrähten 19 eingelegt, welche eine Seele von einem Durchmesser von etwa 2 bis 5 mm aufweisen, auf der durch Sinterung ein oberflächengehärtetes Granulat aus Stahl oder Siliciumcarbid aufgebracht ist. Die Befestigung der Enden der einzelnen Abschnitte von Schneiddrähten 19 erfolgt mit Hilfe von Bügeln 20, welche aus einem relativ weichen Material, beispielsweise Messing, hergestellt sind. Innerhalb der beiden Schenkel dieser Bügel 20 sind jeweils zwei Langlochbohrungen vorgesehen, welche in Verbindung mit entsprechenden Bohrungen im Bereich der rechteckförmigen Aussparungen 18 eine Befestigung mittels Senkkopfschrauben 21 und entsprechenden Senkkopfmuttern gestatten, wobei diese Senkkopfelemente beim Festspannen vollkommen innerhalb der entsprechenden Langlochbohrungen der Bügel 20 zu liegen gelangen.

Das in Fig. 4 dargestellte Kreissägeblatt 7' erweist sich gegenüber Kreissägeblättern 7 mit festmontierten Zähnen insoweit als vorteilhaft, weil durch die starke Oberflächenrauhigkeit der verwendeten Schneiddrähte 19 die zu zertrennenden Altreifen 4 einer Mehrfachbearbeitung ausgesetzt werden, indem sie gleichzeitig geschnitten, geraspelt und zerrissen werden. Durch diesen kombinierten Schneid-, Raspel- und Reißeffekt kann somit den entgegengesetzten Anforderungen eines zufrie nen Schnitts der Stahleinlagen eines Gummireifens einerseits und einem Zertrennen der elastischen Gummibereiche andererseits besser entsprochen werden, so daß auf diese Weise höhere Durchsatzleistungen erzielbar sind. Dabei ergibt sich ferner noch der Vorteil, daß die einzelnen Abschnitte von Schneiddrähten 19 bei Verschleiß relativ einfach ausgetauscht werden können, ohne daß dabei eine Demontage der gesamten Anordnung vorgenommen werden muß. Eine zusätzliche Kostenreduzierung ergibt sich schließlich noch auf Grund des Umstandes, daß bei Verschleiß der äußeren Oberflächen einzelner Abschnitte der Schneiddrähte 19 eine Wendung derselben durchgeführt werden kann, so daß die ursprünglich der Rille der Trägerscheiben 16 zugewendeten und demzufolge nicht verschlissenen Bereiche auf der Außenseite zu liegen gelangen.

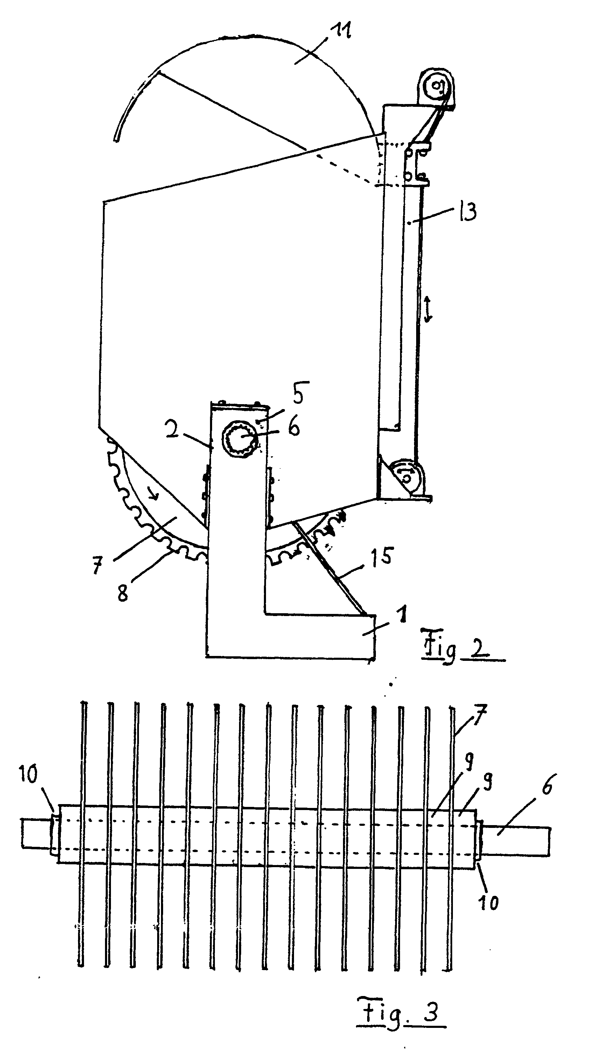

Fig. 5 bis 8 zeigen verschiedene Ausführungsformen von Grobschnetzelmaschinen gemäß der Erfindung, bei welchen die Fördereinrichtungen zum Zuführen der Altreifen 4 zu der Anordnung von Kreissägeblättern 7 mit Hilfe von jeweils einer Zackenwalze 22 erfolgt, welche etwas oberhalb der Anordnung von Kreissägeblättern 7 seitlich versetzt auf einer entsprechenden Welle 23 gelagert ist. Diese Welle 23 wird dabei von einem nicht dargestellten elektrischen Antrieb mit einer Drehgeschwindigkeit von etwa 15 U/Min. angetrieben. Die verschiedenen Zackenwalzen 22 bestehen dabei aus einzelen Zackenscheiben 24, deren Umfangsbereiche bis in die Zwischenabstände zwischen den Kreissägeblättern 7 ragen, wobei der gegenseitige Abstand zwischen den einzelnen Zackenscheiben 24 mit Hilfe von entsprechenden Abstandsringen eingestellt ist.

Bei der in Fig. 5 dargestellten Ausführungsform weisen die Zackenscheiben 24 nach außen ragende Zacken 25 auf, deren Spitzen entlang einer Kreisbahn angeordnet sind. Mit Hilfe dieser Spitzen der Zacken 25 werden die seitlichen Flanken der entlang eines Förderbandes 26 zugeführten Altreifen 4 erfaßt und bei der langsamen Rotation der Zackenwalze 22 der Anordnung von Kreissägeblättern 7 zugeführt. Das Andrücken der seitlichen Flanken der Altreifen 4 an den Spitzen der Zackenscheiben 24 erfolgt dabei mit Hilfe eines schwenkbar gelagerten Führungsbleches 27, welches unter dem Einfluß einer Druckfeder 28 steht. Die Anordnung des Führungsbleches 27 mit der entsprechenden Druckfeder 28 ist dabei derart ausgebildet, daß Altreifen 4 unterschiedlicher Dicke verarbeitet werden können.

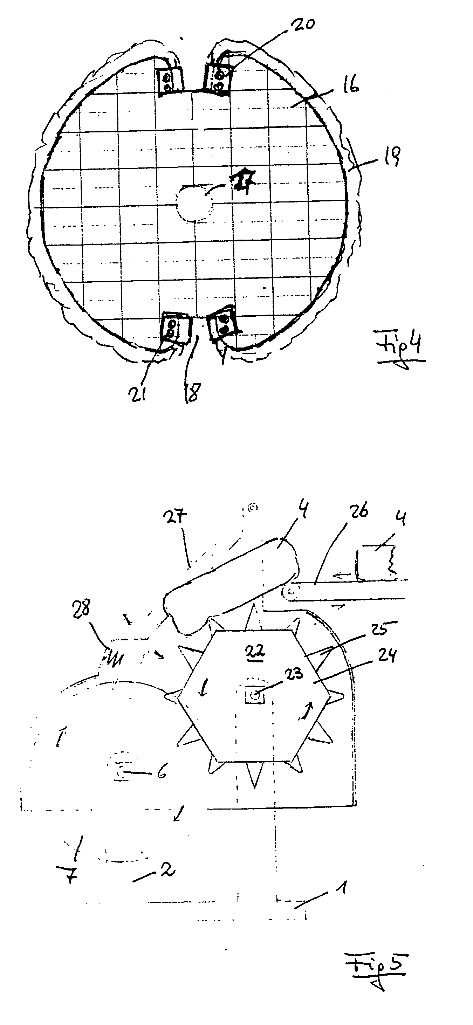

Fig. 6 zeigt eine Zackenwalze 22', bei welcher die Zackenscheiben 24' Zacken 25' unterschiedlicher Höhe aufweisen, wodurch erreicht werden soll, daß die Flanken der Zacken 25' insbesondere in der Felgenöffnung der Altreifen 4 zum Eingriff gelangen, so daß auf diese Weise eine sichere Förderung der Altreifen 4 in Richtung der Anordnung von Kreissägeblättern 7 gewährleistet ist. Anstelle eines Führungsbleches ist in diesem Fall eine Anordnung von nicht angetriebenen Endlosriemen 29 vorgesehen, welche unter dem Einfluß einer Druckfeder 28' in Querrichtung translatorisch verschiebbar ist. Diese Anordnung von Endlosriemen 29 garantiert dabei einen guten Anpreßdruck der Altreifen 4 gegenüber der Zackenwalze 22', wobei die Endlosriemen 29 gleichzeitig eine möglichst reibungsfreie Bewegungsmöglichkeit der Altreifen 4 in Richtung der Anordnung von Kreissägeblättern 7 gewährleisten.

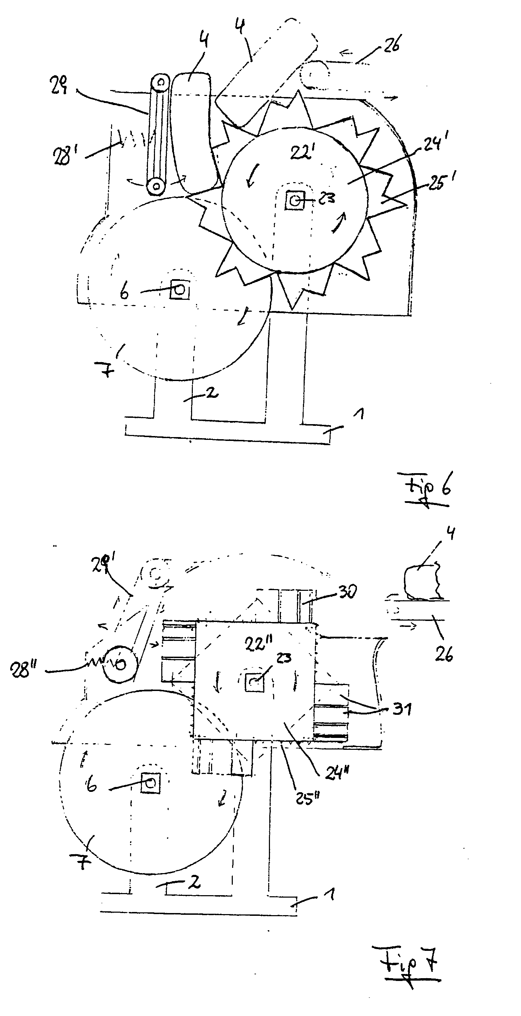

Fig. 7 zeigt eine weitere Ausführungsform der Grobschnetzelmaschine, bei welcher die Zackenwalze 22" Zackenscheiben 24" aufweist, die eine in etwa quadratische Konfiguration besitzen. Die Anordnung ist dabei derart getroffen, daß die zu zerschneidenden Altreifen 4 im wesentlichen flach auf dem quadratischen Außenkanten der Zackenscheiben 24" zum Aufliegen gelangen. Diese Außenkanten der Zackenscheiben 24" sind dabei mit einer Mehrzahl von kleinen Zacken 25" versehen, welche ein gutes Erfassen der Seitenflanken der Altreifen 4 gestatten. Darüber hinaus weisen die quadratischen Zackenscheiben 24" jeweils nach rückwärts hin nach außen ragende Stege 30 auf, welche in ihrer Gesamtheit kreisförmige Mulden 31 bilden, an welchen die rückwärtigen Bereiche der zu zerschneidenden Altreifen 4 zum Anliegen gelangen. Auf diese Weise kann gewährleistet werden, daß die Altreifen 4 bei der Durchführung des Schneidvorgangs durch die Kreissägeblätter 7 mit Sicherheit mitgenommen werden. Ähnlich wie bei der Ausführungsform von Fig. 6 ist auch in diesem Fall eine Anordnung von Endlosriemen 29' vorgesehen, welche in diesem Fall jedoch im oberen Bereich schwenkbar gelagert sind, so daß diese Anordnung unter dem Einfluß einer entsprechenden Druckfeder 28" die Altreifen 4 gegen die Zackenwalze 22" drückt.

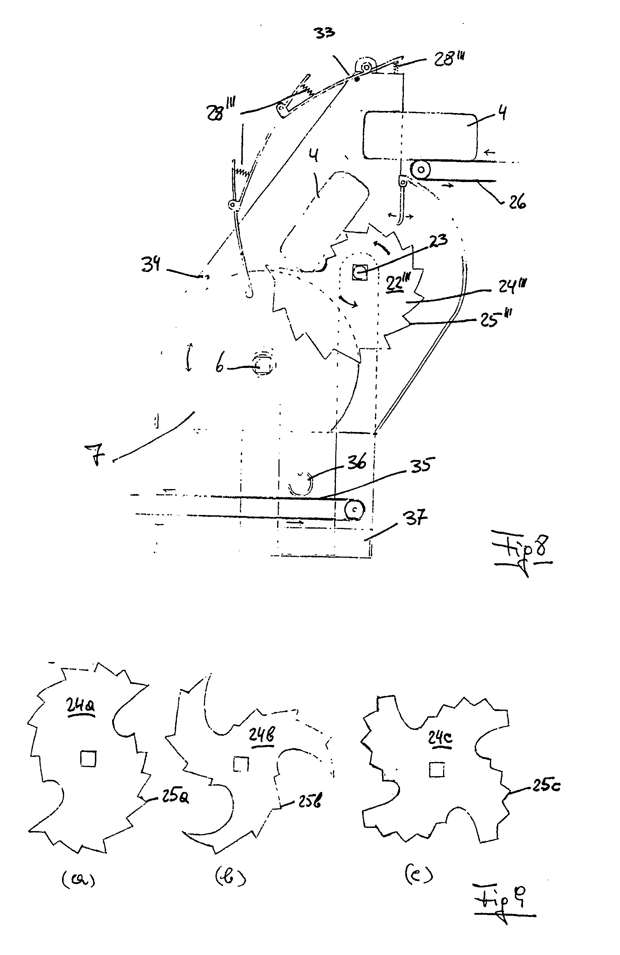

Fig. 8 zeigt schließlich eine besonders zweckmäßige Ausführungsform der Grobschnetzelmaschine gemäß der Erfindung, bei welcher die Zackenwalze 22''' aus einzelnen Zackenscheiben 24''' besteht, bei der die Spitzen der Zacken 25''' entlang einer archimedischen Spirale angeordnet sind. Diese Anordnung der Zacken 25''' erlaubt dabei eine gute Anpassungsfähigkeit an die Verarbeitung von Altreifen 4 unterschiedlicher Dicke. Als Anpreßeinrichtung ist in diesem Fall ein Führungsblech 27' vorgesehen, welches aus drei Führungsblechabschnitten 32 besteht. Diese drei Führungsblechabschnitte 32 sind dabei gelenkig miteinander verbunden und stehen unter dem Einfluß von entsprechenden Druckfedern 28''', welche diese Führungsblechabschnitte 28 in Richtung der zu zerschneidenden Altreifen 4 drücken. Der Schwenkbereich der Führungsblechabschnitte 32 wird dabei mit Hilfe von Anschlägen 33 und 34 begrenzt.

Abgewandelte Ausführungsformen von Zackenscheiben, so wie sie in Verbindung mit der Zackenwalze 22''' der Grobschnetzelmaschine von Fig. 8 verwendbar sind, sind in den Fig. 9a bis c gezeigt. Diese Zackenscheiben 24a, b und c weisen dabei Zacken 25a, b und c auf, welche ebenfalls entlang einer archimedischen Spirale angeordnet sind. Im Gegensatz zu den Zackenscheiben 24''' von Fig. 8, bei welcher die archimedische Spirale sich über einen Winkelbereich von 360° erstreckt, erstrekken sich die durch die Spitzen der Zacken 24a, b und c sich ergebenden archimedischen Spiralen jeweils über einen Winkelbereich von 180, 120 und 90°, so daß bei diesen Zackenscheiben 24a, b und c jeweils zwei, drei oder vier Spiralbereiche vorgesehen werden können.

So wie dies in Fig. 8 gezeigt ist, ist im unteren Bereich der erfindungsgemäßen Grobschnetzelmaschine ein Förderband 35 vorgesehen, mit welchem die aus den Altreifen 4 mit Hilfe der Kreissägeblätter 7 hergestellten Grobschnetzel 36 zur Weiterverarbeitung wegtransportiert werden können.

Das Gehäuse 3 der erfindungsgemäßen Grobschnetzelmaschine ist derart ausgebildet, daß im unteren Bereich eine vollkommen geschlossene Wanne 37 gebildet ist, welche der Aufnahme von Kühlwasser dient. Mit Hilfe einer nicht dargestellten Pumpe kann das in der Wanne 37 vorhandene Kühlwasser den Kreissägeblättern 7 zugeführt werden, so daß gewährleistet ist, daß die Schneiden dieser Kreissägeblätter 7 beim Zerschneiden der Altreifen 4 nicht heißlaufen.

**Ansprüche**

1. Grobschnetzelmaschine zum Zerkleinern von Altreifen, dadurch **gekenenzeichnet**, daß dieselbe eine rotierende Welle (6) aufweist, entlang welcher in regelmäßigen Abständen eine Mehrzahl von Kreissägeblättern (7) befestigt sind, und daß zusätzlich eine Fördereinrichtung (11, 22) vorgesehen ist, mit welcher die zu zerschneidenden Altreifen (4) genau positioniert und vorzugsweise in Längsrichtung ausgerichtet durch die Anordnung von rotierenden Kreissägeblättern (7) drückbar sind.

2. Grobschnetzelmaschine nach Anspruch 1, dadurch gekennzeichnet, daß die Kreissägeblätter (7) entlang ihres Um-fanges eine Mehrzahl von rechteckigen Zähnen (8) aufweisen, welche mit einer Hart- bzw. Diamentbeschichtung versehen sind.

3. Grobschnetzelmaschine nach Anspruch 1, dadurch gekennzeichnet, daß die Kreissägeblätter (7') aus Trägerscheiben (16) bestehen, welche entlang ihres Umfangs mit einer Rille versehen sind, und daß in dieser Rille biegsame Schneiddrähte (19) zur Auflage gelangen, deren abgebogene Enden mittels entsprechender Bügel (20) in rechteckigen Aussparungen (18) der Trägerscheiben (16) fixiert sind.

4. Grobschnetzelmaschine nach einem der Ansprüche 1 bis 3, dadurch gekennzeichnet, daß dieselbe ein schachtförmiges Gehäuse (3) aufweist, und daß die Fördereinrichtung durch einen Gehäusedeckel (11) gebildet ist, welcher unter Einsatz eines Antriebsmechanismus (13) in Richtung der Anordnung von rotierenden Kreissägeblättern (7) bewegbar ist.

5. Grobschnetzelmaschine nach einem der Ansprüche 1 bis 3, dadurch gekennzeichnet, daß die Fördereinrichtung eine drehbare Zackenwalze (22) ist, welche relativ langsam vorzugsweise gegenläufig zu der Drehrichtung der Kreissä geblätter (7) angetrieben ist.

6. Grobschnetzelmaschine nach Anspruch 5, dadurch gekennzeichnet, daß die Zackenwsalze (22) aus einzelnen Zackenscheiben (24) besteht, deren Umfangsbereiche bis in die Zwischenräume zwischen den einzelnen Kreissägeblättern (7) ragen.

7. Grobschnetzelmaschine nach Anspruch 6, dadursch gekennzeichnet, daß die Zackenscheiben (22") zusätzliche Mulden (31) bilden, in welchen die rückwärtigen Enden der zu zerschneidenden Altreifen (4) zu liegen gelangen.

8. Grobschnetzelmaschine nach Anspruch 6, dadurch gekennzeichnet, daß die Spitzen der einzelnen Zackenscheiben (24''') eine Spiralkurve bilden.

9. Grobschnetzelmaschine nach Anspruch 8, dadurch gekennzeichnet, daß entlang des Umfangs der einzelnen Zackenscheiben (24a bis c) zwei bis vier Spiralbereiche vorgesehen sind.

10. Grobschnetzelmaschine nach einem der Ansprüche 6 bis 9, dadurch gekennzeichnet, daß der gegenseitige Abstand zwischen den einzelnen Kreissägeblättern (7) und der Abstand zwischen den Zackenscheiben (22) mit Hilfe von entsprechenden Abstandsringen (9) einstellbar ist.

11. Grobschnetzelmaschine nach einem der Ansprüche 5 bis 10, dadurch gekennzeichnet, daß auf der gegenüberliegenden Seite der in Bezuug auf die Anordnung von Kreissägeblättern (7) versetzt angeordneten Zackenwalze (22) eine bewegliche Anpreßeinrichtung in Form eines federbeaufschlagten ein- oder mehrteiligen Führungsbleches (27), einer oder mehrerer federbeaufschlagten Anpreßwalzen und/oder einer Mehrzahl von nicht angetriebenen Endlosriemen (29) vorgesehen ist, mit welcher die zu zerschneidenden Altreifen (4) gegen die Zackenwalze (22) drückbar sind.

12. Grobschnetzelmaschine nach einem der vorangegangenen Ansprüche dadurch gekennzeichnet, daß in die Zwischenräume zwischen den einzelnen Kreissägeblättern (7) zusätzlich Abstreifer (15) hineinragen, mit welchen von den Kreissägeblättern (7) eventuell mitgenommene Grobschnetzel (35) abstreifbar sind

13. Grobschnetzelmaschine nach einem der vorgangegangenen Ansprüche, dadurch gekennzeichnet, daß unterhalb der Kreissägeblätter (7) zusätzlich ein Förderband (35) vorgesehen ist, mit welchem die erzeugten Grobschnetzel (35) zur Weiterverarbeitung entfernbar sind.

14. Grobschnetzelmaschine nach einem der vorangegangenen Ansprüche, dadurch gekennzeichnet, daß dieselbe ein geschlossenes Gehäuse (3) aufweist, welches nach unten hin eine Wanne (37) bildet, die der Aufnahme von Kühlwasser dient, und daß zusätzlich eine Pumpeneinrichtung vorgesehen ist, mit welcher innerhalb der Wanne (37) befindliches Kühlwasser den rotierenden Kreissägeblättern (7) zuführbar ist.

Fig 1.

11

13

5

2

6

7

8

15

1

_Fig 2_

7

10

9

9

6

10

_Fig. 3_

Fig4

Fig5

Fig 6

Fig 7

10

Fig 8

(a)    (b)    (c)

Fig 9

**Europäisches
Patentamt**

**EUROPÄISCHER
RECHERCHENBERICHT**

Nummer der Anmeldung

**EP 90 12 2219**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-1 569 218   (SNYDER et al.)<br>* Ansprüche 1,3; Abbildung 2 *<br>– – – | 1,12,5,10,<br>13,14 | B 29<br>B 17/00<br>B 23 D 45/10<br>B 23 D 47/04<br>B 02 C 18/06 |
| Y | DE-A-2 805 035   (SCHNELL)<br>* Ansprüche 1,6; Abbildungen 1,2 *<br>– – – | 1,12,5,10,<br>13,14 | |
| Y | US-A-4 757 949   (HORTON)<br>* Spalte 3, Zeilen 14-20; Abbildungen 1,10 *<br>– – – | 5,10,13,<br>14 | |
| A | US-A-4 142 688   (JOHNSON et al.)<br>* Anspruch 1; Abbildung 1 *<br>– – – | 1,5 | |
| A | DE-A-2 730 912   (SPIELVOGEL)<br>* Anspruch 1 *<br>– – – | 2 | |
| A | DE-C-3 323 409   (FESTO-MASCHINENFABRIK GOTTLIEB-STOLL)<br>* Ansprüche 1,2 *<br>– – – – – | 3 | |

**RECHERCHIERTE
SACHGEBIETE (Int. Cl.5)**

B 29 B 17/00
B 23 D 45/00
B 23 D 47/00
B 02 C 18/00
B 29 B 13/00
B 26 D 1/00

Der vorliegende Recherchenbericht wurde für alle Patentansprüche erstellt

| Recherchenort | Abschlußdatum der Recherche | Prüfer |
|---|---|---|
| Den Haag | 04 März 91 | BUFACCHI B.A.M. |